# EUROPEAN PATENT SPECIFICATION

(11) **EP 2 798 012 B1**
(45) Date of publication and mention of the grant of the patent: **07.09.2016**
(21) Application number: 12815727.8
(22) Date of filing: 21.12.2012
(51) Int. Cl.: C09C 1/02, C01F 11/18, C04B 14/26, C04B 14/28, C08K 3/26, D21H 17/67, D21H 19/38

(54) **USE OF PRECIPITATED CARBONATE IN THE MANUFACTURE OF A FIBRE PRODUCT**
VERWENDUNG VON GEFÄLLTEM CALCIUMCARBONAT ZUR HERSTELLUNG EINES FASERPRODUKTS
UTILISATION DE CARBONATE PRÉCIPITÉ DANS LA FABRICATION D'UN PRODUIT FIBREUX

(30) Priority: 28.12.2011 FI 20116326
(43) Date of publication of application: 05.11.2014
(73) Proprietor: Nordkalk OY AB, 21600 Pargas (FI)
(72) Inventor: SAASTAMOINEN, Sakari, 13210 Hämeenlinna (FI); GRÖNBLOM, Teemu, 21600 Pargas (FI); GRÖNROOS, Lars, 21600 Pargas (FI)
(74) Representative: Seppo Laine Oy
(86) International application number: PCT/FI2012/051286
(87) International publication number: WO 2013/098480

(56) References cited:
- WO-A1-2007/057509
- WO-A1-2011/151525
- US-B1- 6 387 212

## Description

### Field of the invention

The present invention relates to a filler or a filler mixture, which contains carbonate, and to a process for the manufacture thereof by precipitating the filler directly into the pulp or as a separate process without the presence of fibres, particularly from the white water of the paper or board manufacture. The invention also relates to a fibre product which contains said filler, such as a paper or board product, or a plastic, rubber, concrete or paint product.

### Description of the prior art

During the past decades, the demand for precipitated calcium carbonate has been growing strongly particularly in the paper and board manufacture, the processing of rubbers and plastics, and the manufacture of printing inks, paints, and adhesives. Precipitated calcium carbonates have an excellent brightness and scattering ability, as well as a low price. Furthermore, precipitated calcium carbonate can increase the mechanical strength, when used in the applications mentioned above.

These calcium carbonates have a crystal structure that typically is in the form of calcite, aragonite, or vaterite. Calcite is typically found in crystal forms, such as the scalenohedral, rhombohedral, cubic, and prismatic forms. Aragonite is orthorhombic and it is typically found in elongated forms. At normal temperature and pressure, vaterite is unstable, changing into calcite and aragonite. Generally, vaterite has a spherical shape. The crystal form can be transformed into acicular, cubic, spherical, and many other crystal forms by changing the reaction conditions, such as the concentration of the slaked lime and the reaction temperature.

The strength of paper and board mainly develops between the fibre and the charged groups of fines, due to hydrogen bonds. These charged groups particularly include hydroxyl and carboxyl groups. When improving the strength, it is primarily done in a mechanical manner by grinding the fibres, thereby attempting to increase the fibrillation of the fibres. The strength is dependent on the strength of an individual fibre grade, the strength between the fibres, the number of fibre bonds, as well as the distribution of fibres and bonds in the finished paper or board.

Typically, the fillers or pigments that are used in the manufacture of paper and board have an average particle size of less than 5 µm, and they have a light colour. The most typical fillers include kaolins, talcs, ground calcium carbonate (GCC), and precipitated calcium carbonate (PCC). In addition, there are more expensive special pigments, such as precipitated aluminium silicates, satin white, and titanium dioxide. Drawing an exact line between fillers and coating pigments is difficult, but roughly fillers have a larger size and a coarser shape than the pigments used in coating. In theory, an optimal particle size for the most common fillers and coating pigments, from the point of view of maximum light scattering, is about 0.4 - 0.5 µm. Typically, the average particle size of coating pigments is, however, 0.5 - 1 µm, and that of fillers 1.5 - 4 µm.

The greatest disadvantage of using fillers and pigments, as well as other fillers, is the weakening of the strength of the paper or board structure when replacing particularly chemical mass with filler. This is caused by fillers preventing the generation of hydrogen bonds between the fibres by attaching themselves to the surface of the fibres. However, calcium carbonates, both the ground (GCC) and precipitated (PCC) forms, are widely used because of their low price and good light scattering properties, particularly in replacing the fibre of chemical pulp. Paper and board that is manufactured from recycled, de-inked and mechanical pulps could be replaced with calcium carbonates, but the darkening of mechanical pulp caused by alkali often limits their use in the manufacture of the paper and board grades manufactured from these pulps.

Historically, the problem of reduced strength caused by the addition of filler has been reduced particularly by agglomerating single filler particles into larger agglomerates. This has been presented, among others, in US specifications 4 225 383, 4 115 187, 4 445 970, 5 514 212, and 4 710 270, as well as GB publications 2 016 498 and 1 505 641. Typically, the anionic filler particles in these have been agglomerated into larger aggregates with a cationic additive in a mixture. It has been observed that the strength properties and filler retention have improved in this way, but at the same time, the optical properties have declined.

There are also publications, wherein latexes have been utilised to reduce the decrease in strength caused by the addition of fillers. This is presented, among others, in US specifications 4 178 205, 4 189 345, 4 187 142, 4 710 270, and 7 074 845.

US specification 6 387 212 relates to a process of obtaining fibres with integral calcium carbonate particles. The process includes the steps of preparing a composition comprising calcium bicarbonate, preparing a composition comprising calcium hydroxide and mixing the compositions along with fibre so that calcium carbonate is precipitated on the fibres.

The decrease in strength and stiffness of the paper or board product when the fibre is replaced with filler are mainly caused by the fillers weakening the generation of hydrogen bonds between the fibres, since the surface of the fillers does not form hydrogen bonds. At present, the filler is generally added directly to the pulp. In the wire section, only a portion of the added filler is attached to the finished paper or board web. Regardless of this, the rest of the filler is conducted through the white water system to form a part of the finished paper or board structure, but then the risks of various runnability problems have increased mainly due to the attachment of various hydrophobic substances to the fillers of the white water system. Generally, these runnability problems in the paper or board machine appear, for example, as contamination of the wires and felts, and finally, as breaks. A part of the filler of the white water system also finally burdens the sewage treatment plant, since all of the material is never carried out of the process along with the finished paper or board. The weaker fibre-fibre bonds on the surface of the paper or board that are caused by the filler may also result in an increase in the dust formation of the surface during printing.

Consequently, there is a need for a fibre product, wherein the filler would attach to the fibre and the other fillers more effectively and, at the same time, would provide the product with advantageous strength properties that preferably would be further improved in comparison with the known solutions.

### Brief description of the invention

An object of the present invention is to provide a new fibre product, such as a paper or board product, which has a high strength, brightness, ink density, and opacity.

Particularly, it is an object of the present invention to provide a new carbonate-containing filler that can be utilised in such a fibre product, especially so that the carbonate filler is attached to the gaps between the fibres of the fibre product.

Such a carbonate-containing filler and fibre product can be provided, for example, by the process according to the invention.

The present invention thus relates to the carbonate-containing filler and to the production process of the same. Such a filler is further utilised in the process of manufacturing the fibre product according to the invention, wherein the fibre product contains chemical pulp fibre and/or wood fibre and/or synthetic fibre, and which preferably is paper or board. In this process of manufacturing the fibre product, carbonate filler is attached between the chemical pulp fibres or wood fibres and to the fibrils, whereafter said fibre product is produced from the pulp.

More precisely, the process of manufacturing the carbonate-containing filler according to the present invention is characterised by what is stated in the characterizing part of claim 1.

The process of manufacturing the fibre product according to the invention is characterised by what is stated in the characterizing part of Claim 9.

Several considerable advantages are reached using the invention. It has been demonstrated that by using underpressure when forming the carbonate-containing filler, improvements are achieved in the brightness, strength, opacity, and printability (the absorption properties of the ink) of the final product, such as the paper or board, which utilizes the carbonate. Thus, a part of the fibres of the final product can be replaced with the filler so that the strength properties simultaneously are maintained on a better level than when using conventional fillers.

Particularly advantageous properties are achieved when a polymer that increases the dry strength is used together with the carbonate in the filler or with the filler in the manufacture of the fibre product.

To increase the pH and form the carbonate in negative pressurisation, it is sufficient to release the carbon dioxide from the reaction mixture without adding a separate chemical, i.e. alkali. This is of particular advantage at the paper and board mills, where there is a capacity of free carbon dioxide available from the pulp mill.

### Brief description of the drawings

Fig. 1 is a graphic depiction of the impact of the particle size of the carbonate filler (APS) and a portion of starch on the TEA values (TEA1) of the fibre product, when a basis weight of 80 g/m² and 10% of carbonate filler are used in the fibre network.
Fig. 2 is a graphic depiction of the impact of the particle size of the carbonate filler (APS) and a portion of starch on the Scott Bond values (Scott1) of the fibre product, when a basis weight of 80 g/m² and 10% of carbonate filler are used in the fibre network.
Fig. 3 is a graphic depiction of the brightness and opacity values of kaolins and the carbonate filler (a size category of 6.5 µm). The results are normalized to a filler content of 6% in a basis weight of 80 g/m².
Fig. 4 shows scanning electron microscope images of chemical pulp sheets of 80 g/m², comprising carbonate fillers of a size category of 13 µm (the upper row) and 6.5 µm (the lower row) on the surface of the sheets.

### Detailed description of the preferred embodiments of the invention

In the commonly used precipitation processes of carbonate, the precipitated calcium carbonate (PCC) is manufactured by changing the pH from alkaline toward neutral. In the manufacture of the carbonate filler according to the present invention, the pH is increased from acidic to a pH of over 7. The purpose is to provide carbonate at the precipitation stage, which together with possible polymers increasing the dry strength could increase the strength of the filler-containing network in the final product, without weakening the optical properties (opacity and brightness).

The present invention thus relates to a process of manufacturing a filler containing carbonate, wherein an acidic bicarbonate ion solution is formed from a corresponding hydroxide solution by adding carbon dioxide to said hydroxide solution, whereafter the carbonate portion of the filler is formed by increasing the pH of the formed acidic bicarbonate ion solution to a neutral or alkaline range by means of underpressure or centrifugal force or a combination thereof.

"Acidic" in this context refers to a pH value of below 7, whereas "neutral" refers to a pH value within 7 - 8, and "alkaline" refers to a pH value of over 8, particularly over 10.

"Underpressure or negative pressure" in this context refers to a pressure under ambient pressure or air pressure, preferably within the range of 0.60 - 1 bar, i.e. as an absolute pressure 0.4 - 0 bar; more preferably within the range of 0.85 - 0.95 bar, i.e. as an absolute pressure 0.15 - 0.05 bar; particularly within the range of 0.88 - 0.94 bar, i.e. as an absolute pressure 0.12 - 0.06 bar.

When exploiting centrifugal force, a speed of rotation of 50 - 2000 rpm (rotations per minute) is preferably used.

The temperature while carrying out the stages of the process can be close to ambient temperature (about 25°C) or slightly higher, particularly 35 - 70 °C.

The used hydroxide is preferably calcium hydroxide or magnesium hydroxide or a mixture thereof. More preferably the used hydroxide is manufactured by elutriating burnt lime, burnt dolomite, MgO or another source of calcium or magnesium in water or an aqueous solution, which when elutriated in such a solution gives an alkaline solution, or by elutriating a mixture of two or more of the above.

The hydroxide and the carbon dioxide can be added to said aqueous solution essentially at the same time. Optionally, they are added at different stages.

The "aqueous solution" refers to all solutions or suspensions which contain more than 50% by weight of water. Consequently, the aqueous solutions include both pure water (100% by weight of water) and dilute fibre suspensions.

Any of the aqueous solutions of the paper or board machine can be converted into the bicarbonate ion solution suitable for use as the starting material solution of the process. Preferably, said aqueous solution is a process water of the paper or board manufacture, particularly circulation water.

A "bicarbonate ion solution", in turn, is an aqueous solution containing various states of carbonate, its pH being within a range where the states of carbonate are presumably mainly in the form of bicarbonate; in this connection particularly in a pH range of 4 - 10.

When varying the pH of the carbonate- or bicarbonate-containing solution, e.g. according to the invention, its carbonate states also vary according to the so-called carbonate system. The main states of the carbonates are:

H₂CO₃ ↔ HCO₃⁻ ↔ CO₃²⁻

At an acidic pH, soluble carbon dioxide (CO₂) and, to a minor extent, carbonic acid (H₂CO₃), are the main states of carbonate. In the neutral (on both sides of a pH of 7) and alkaline ranges, bicarbonate or hydrogen carbonate (HCO₃⁻) is the main state of carbonate up to a pH of about 10. In a highly alkaline range (pH > 10), carbonate (CO₃²⁻) is the main state.

The alkalinity of carbonate refers to the content of strong acid, with which the aqueous solution can be titrated to the end point of phenolphthalein. At this point, all of the CO₃²⁻ has been converted into the ion state HCO₃⁻. This takes place at a pH of about 8.3. In the most important pH range of the paper and board manufacture, pH 6-8, bicarbonate (HCO₃⁻) is the predominant state. Further, reasonably well dissolved carbon dioxide and some carbonic acid and colloidal carbonate have entered this pH range from the acidic side of the pH range.

The solution in the acidic pH range (pH < 6) is herein called the acidic bicarbonate ion solution.

In the present invention, carbonate is formed from the bicarbonate ions in the solution. It is common knowledge that bicarbonate ions can be precipitated into carbonate particles from a carbonate ion solution by increasing the pH or the temperature.

When the temperature is increased, carbon dioxide is released and the bicarbonate reacts with, e.g., free calcium or magnesium ions, according to the following reaction equation:

Ca²⁺ + 2HCO₃⁻ → CaCO₃↓ + CO₂↑ + H₂O↑.

Correspondingly, when the pH is increased with an alkali, e.g. NaOH or Ca(OH)₂, the carbonate particles can be precipitated according to the following reaction equations:

Ca²⁺ + 2HCO₃⁻ + 2NaOH → CaCO₃↓ + Na₂CO₃ + 2H₂O.

Ca²⁺ + 2HCO₃⁻ + Ca(OH)₂ → 2CaCO₃↓ + 2OH⁻.

However, the present invention is based on a situation where sufficiently warm bicarbonate ion solution (of at least room temperature) is subjected to underpressure or the effect of centrifugal force, so that carbon dioxide is released to the air from the solution.

In particular, it has been demonstrated that improvements are achieved in the strength, opacity, and printability (the absorption properties of the ink) of the final product, such as the paper or board, in this manufacture of carbonate filler by using underpressure, for example directly in the process of the paper or board mill. These advantages are further enhanced when the polymer that increases the dry strength is used with the carbonate in the filler, or in the final product that is manufactured with the filler.

To increase the pH and form the carbonate in under-pressurisation, it is sufficient that the carbon dioxide is released from the bicarbonate ion solution described above, which is at an acidic pH, without a separate chemical, such as alkali. This is of particular advantage in the paper and board mills, where there is a free carbon dioxide capacity available from a pulp mill for the manufacture of the acidic bicarbonate ion solution.

In the paper and board industry, calcium carbonate is commonly used as the carbonate, both as a filler and as a coating pigment. Well-known forms of calcium carbonate include ground calcium carbonate (GCC) and precipitated calcium carbonate (PCC). Conventionally, the aim has been to keep their average particle size as larger than 500 nm, typically 1 - 2 µm, as it is believed that the best possible light scattering efficiency (brightness and opacity) is then achieved. Their solubility in water is fairly low under normal conditions. However, under acidic conditions soluble calcium ions are released, increasing the hardness of the water.

The average particle size (APS50) of the carbonate manufactured according to the present invention is preferably 0.5 - 15 µm, particularly 1 - 8 µm.

Further filler can be added to the acidic bicarbonate ion solution used in the invention before the carbonate portion of the filler is formed from the solution. This added filler is preferably commercial GCC or PCC or a mixture thereof or, optionally, a filler other than carbonate, such as wollastonite, aluminium silicate, kaolin, talc, satin white or a titanium oxide.

The "carbonate portion" in this context refers to the solid carbonate of the filler or filler mixture which is to be formed or is formed online, thus describing the carbonate content in comparison with the added fillers or corresponding additives. This portion is preferably > 5%.

It is also possible to increase the dry matter content of the obtained filler solution containing carbonate. This is carried out, particularly, by infiltrating, depositing, pressing, evaporating, drying, or by means of centrifugal force.

According to an embodiment of the invention, a dry strength polymer is used with the carbonate portion of the filler, preferably being selected from the group of starch, aldehyde starch, guar gum, polyacrylamide, glyoxilized polyacrylamide, carboxyl methyl cellulose, polyvinyl alcohol, latex or citosane, or a mixture of two or more of the above, most preferably from a starch.

In the paper or board industry, the decrease in dry strength caused by the use of fillers has typically been compensated using water-soluble natural and artificial polymers. The use of fillers increases the need to use dry strength agents. The most typical dry strength agents include starch, carboxyl methyl cellulose (CMC), guar gum, and polyacrylamide (PAM). Polyvinyl alcohol and latex can also be used as dry strength polymers, even though in practice, they are generally not used in the wet section of the paper or board manufacturing process.

Starch is the oldest and most commonly used dry strength agent in increasing the strength of fibre networks, its strength-increasing impact being caused by its large amount of hydroxyl groups, which increase the generation of hydrogen bonds. Cationic and amphoteric starches are the most commonly used starches. Generally, when these are added to high consistency pulp, the effect is primarily an increase in the strength properties. In addition to cationization, an ether bond can be formed in the starch in the manufacture of carboxyl methyl cellulose (CMC). Native starch can further be esterified, oxidized, hydrolyzed, and treated using a combination of enzymes and heating or some or all of the above. The most typical sources of native starch are potato, barley, wheat, corn and tapioca. However, when added to a dilute pulp or short circulation pulp, the starch improves the retention of the fines and filler, instead of increasing the strength.

In addition, starch is used in the dispersion of stock sizes, such as AKD and ASA. The surface sizing of paper is also often carried out with starch, as well as the attachment of the various layers of board to each other.

According to a particularly preferred embodiment, the carbonate filler is manufactured so that the aqueous solution is first rendered acidic by dosing carbon dioxide into it either simultaneously or before burnt lime or dolomite or the corresponding hydroxide solutions thereof is/are added to the aqueous solution. The bicarbonate ion solution according to the invention, which has been acidified, is then obtained. Subsequently, the pH of the solution is increased to the neutral or alkaline range by under-pressurisation, whereby the carbonate filler according to the invention is generated.

The present invention also relates to the filler or filler mixture containing carbonate which has been manufactured by means of the above-described process. The filler or filler mixture in question is thus manufactured by a process, wherein the pH is increased by means of underpressure or centrifugal force or a combination thereof from the acidic range to the neutral or alkaline region.

This filler contains at least 5% by weight, preferably 25 - 100% by weight, most suitably 50 - 90% by weight of carbonate, which has been formed in solid form in the aqueous solution. The average particle size of this carbonate is preferably 0.5 - 15 µm, particularly 1 - 8 µm. The carbonate is preferably selected from calcium or magnesium carbonate or a mixture thereof. Most suitably, the filler consists of this calcium or magnesium carbonate or a mixture thereof. Particularly preferred fillers in the connection of the invention are ground calcium carbonate (GCC), precipitated calcium carbonate (PCC) or mixtures thereof.

The pH of the filler formed according to the invention is neutral or alkaline. The final pH value of the filler is preferably 6 - 8.

The carbonate manufactured online, according to the invention, can also be mixed with the additional filler into a filler mixture. This added filler is preferably commercial GCC or PCC or a mixture thereof, or, optionally, it contains a filler other than a carbonate, such as wollastonite, aluminium silicate, kaolin, talc, satin white or a titanium oxide.

According to an embodiment of the invention, the carbonate portion of the filler is in the final filler already mixed with the dry strength polymer, most preferably in the pulp, which polymer preferably is selected from the group of starch, aldehyde starch, guar gum, polyacrylamide, glyoxilized polyacrylamide, carboxy-methyl cellulose, polyvinyl alcohol, latex or citosane, or a mixture of two or more of the above, most preferably from a starch.

The present invention further relates to a process of manufacturing a fibre product containing chemical pulp fibre, wood fibre or synthetic fibre, or a mixture thereof. In this process, the pulp is manufactured, to which the carbonate-containing filler is added, whereafter the pulp is compressed into a fibre product, which optionally is coated.

The used filler or filler mixture increases the optical properties of the structure of the fibre product to be manufactured, and maintains its strength properties, optionally together with the water-soluble, dry strength -increasing polymer.

The fibre product refers to a thin, plate-like fibre product, which particularly is a paper or board product.

The fibres of the product can be any natural fibres or synthetic fibres or a mixture thereof. In particular, the fibres can be chemical pulp or mechanical pulp or a mixture thereof. For example, sulphate and sulphite cellulose fibres, dissolving pulp, nanocellulose, chemi-mechanical (CTMP), thermomechanical pressure groundwood (TMP), pressure groundwood (PGW), groundwood pulp, recycled fibre, or fibres of de-inked pulp can constitute the fibres of the product. Typically, sulphate and sulphite celluloses are called chemical pulps, and thermomechanical pulp, pressure groundwood, and groundwood pulp are called mechanical pulps. The density of pulp made from these fibres, when the filler or filler mixture according to the invention is added thereto, is preferably 0.1 - 5%, particularly 0.2 - 1.5%.

In the paper or board manufacturing process, a "filler" specifically refers to the particles, which are added or attached to the gaps between the fibres, and the purpose of which is to reduce the fibre content of the final product. In connection with the present invention, the definition also covers pigments, including coating pigments.

Typically, such known fillers and pigments of the paper and board manufacture have an average particle size of less than 5 µm, and they have a light colour. The most typical fillers include kaolins, talcs, ground calcium carbonate (GCC), and precipitated calcium carbonate (PCC). In addition, there are more expensive special pigments, such as precipitated aluminium silicates, satin white, and titanium dioxide. Drawing an exact line between fillers and coating pigments is difficult, but roughly, fillers have a larger size and a coarser shape than the pigments used in coating. In theory, an optimal particle size for the most common fillers and coating pigments, from the point of view of maximum light scattering, is about 0.4 - 0.5 µm. Typically, the average particle size of coating pigments is, however, 0.5 - 1 µm, and that of fillers 1.5 - 4 µm.

According to the invention, at least the carbonate portion of the filler used in the fibre product is formed in the aqueous solution to be used in the manufacture of the pulp before the pulp is compressed into the fibre product, or it is formed in a coating paste before the optional coating of the fibre product. Thus, when the fibre product is a paper or board product, the aqueous solution, in which the carbonate portion is formed, is then the process water of the paper or board manufacture, preferably the circulation water, particularly before the head box of the machine.

To prepare the carbonate of the filler, the above-described process is used, wherein the pH is increased from the acidic range to the neutral or alkaline range by means of under-pressure or centrifugal force or a combination thereof.

The carbonate to be formed is preferably calcium or magnesium carbonate or a mixture thereof.

It is also possible to increase the dry matter content of the filler solution containing carbonate before adding it to the fibres. Particularly, this is carried out by infiltrating, depositing, pressing, evaporating, drying, or by means of centrifugal force.

According to an embodiment of the invention, a dry strength polymer is used in the pulp with the carbonate portion of the filler, preferably selected from the group of starch, aldehyde starch, guar gum, polyacrylamide, glyoxilized polyacrylamide, carboxyl methyl cellulose, polyvinyl alcohol, latex or citosane, or a mixture of two or more of the above, most suitably from a starch.

In the present invention, the amount of optionally used starch is 0 - 40 kg/t of pulp. Increasing the addition from this limit weakens among others the dewatering of the wire section. This is caused by the anionic charge of the fibres and the filler being neutralized by the cationic starch, whereby the rest of the starch no longer attaches to the fibres and the filler, but remains in the form of dissolved starch in the circulation waters.

The following non-limiting examples illustrate the invention and its advantages.

### Examples

The following examples illustrate the improvements in several properties of paper technology, which are achieved by means of the carbonate filler according to the invention.

In theory, it could be considered that the structure of the fibre product manufactured according to the invention would improve the opacity and printability of the product, when the carbonate filler that is brighter than the fibres is incorporated into the fibre network. This improves the light scattering and the absorption of ink.

The increase in strength properties with the same filler and filler content is due to the carbonate filler still being in an unstable, amorphous state when brought together with the fibres, whereby the carbonate filler is capable of increasing the strength bonds between the hydroxyl groups of the dry strength polymer and the hydrogen-bonding groups of the fibre.

### Example 1 (Manufacture of the acidic bicarbonate solution)

The acidic bicarbonate ion solution was manufactured by mixing 100 or 200 g of burnt lime (CaO) with 500 g or 1000 g, respectively, of water at 45 °C. The Ca(OH)₂ slurry thus generated was added to 30 litres of tap water. Subsequently, the water and the calcium hydroxide were allowed to react with carbon dioxide conveyed to the mixture, so that the pH of the mixture at the end of the reaction was 6.3. After 12 hours of sedimentation, the precipitate that sedimented on the bottom was separated from the dissolved and colloidal material (Ca ions, carbonic acid, bicarbonate and colloidal calcium carbonate). The precipitate that sedimented on the bottom was not used in the tests. The bicarbonate ion solution thus manufactured was used as raw material in the precipitation tests described below.

A portion of the acidic bicarbonate ion solutions thus manufactured was further utilised, so that their entire solid matter (also the sedimenting portion) was heated to 50 °C and underpressurised for 5 minutes to 0.92 bar, i.e. 0.08 bar absolute pressure. The underpressurization was carried out in a 50-litre steel container. The underpressure was created by means of a pump. As a result, the particle sizes (APS10, APS50, and APS90), conductivity, and pH of Table 1 were obtained.

**Table 1. 100 and 200 g of CaO per 30 litres of water. All of the solid matter was underpressurised.**

| gCaO/30L | APS10, µm | APS50, µm | APS90, µm | Conductivity, µS/cm | pH |
|---|---|---|---|---|---|
| 100 | 2.8 | 8.5 | 28.5 | 460 | 7.5 |
| 200 | 1.3 | 6.2 | 13.8 | 450 | 7.5 |

In the above table 1, the 100 g of CaO in 30 litres contained 5.6 g/l of carbonate after the underpressurisation. The 200 g of CaO in 30 litres contained 11.3 g/l of carbonate after the underpressurisation.

### Example 2 (Precipitation of bicarbonate as a separate process)

In this example, the bicarbonate ion solutions (30 litres) manufactured according to the previous example were used, 100 g of calcium oxide having been added to one of them and 200 g of calcium oxide to the other. The precipitate that sedimented on the bottom was not used in the tests. The bicarbonate solutions were heated to 55 °C, after which an underpressure of 0.92 bar (i.e. an absolute pressure of 0.08 bar) was allowed to influence the bicarbonate ion solution in a 50-litre steel container. The underpressure was created by means of a pump.

Tables 2 and 3 show the delay times, after which the samples were taken out of the underpressure container, and the measured properties of the samples.

**Table 2. 100 g of calcium oxide (CaO) per 30 litres of water.**

| Time, sec | APS10, µm | APS50, µm | APS90, µm | Conductivity, (µS/cm | pH |
|---|---|---|---|---|---|
| 0 | 1.1 | 8.3 | 31.0 | 1430 | 6.63 |
| 30 | 3.3 | 5.7 | 10.5 | 970 | 7.29 |
| 120 | 4.3 | 8.8 | 22.3 | 830 | 7.31 |
| 240 | 4.2 | 9.4 | 23.0 | 676 | 7.40 |
| 600 | 3.7 | 7.6 | 16.4 | 550 | 7.40 |

**Table 3. 200 g of calcium oxide (CaO) per 30 litres of water.**

| Time, sec | APS10, µm | APS50, µm | APS90, µm | Conductivity, µS/cm | pH |
|---|---|---|---|---|---|
| 0 | 2.3 | 11.0 | 28.2 | 1115 | 6.55 |
| 30 | 0.8 | 7.2 | 18.3 | 790 | 7.26 |
| 120 | 1.0 | 7.6 | 18.2 | 740 | 7.27 |
| 240 | 1.0 | 6.7 | 16.3 | 740 | 7.34 |
| 600 | 3.3 | 13.2 | 26.0 | 690 | 7.43 |

The above Tables 2 and 3 show that 100 g of CaO/30 I, which is at an underpressure for 30 seconds, produces the smallest average particle size (APS50). 200 g of CaO/30 I, at the underpressure for 600 sec, provides the largest carbonate particles as the average particle size (APS50). The particle sizes (APS10, APS50, and APS90) were measured with a Malvern Mastersizer 2000. Both tables indicate that along with the carbon dioxide releasing from the bicarbonate solutions, the acidic solutions become neutral and alkaline. While the pH increases at an underpressure, the conductivity decreases when the calcium ions precipitate carbonate particles from the carbonate ions.

### Example 3 (Precipitation of bicarbonate with fibres present)

In laboratory tests, pine pulp and birch pulp ground to an SR number of 30 were used. Of the pulp, 70% was pine pulp and 30% was birch pulp. The density of the pulp was 3.8%. From this pulp, sheets of 80 g/m² were made by a sheet mould at a density of about 0.2%. Control samples were diluted to a density of 0.2% with tap water. A dilution to a density of 0.2% was made with said bicarbonate ion solution (Table 3) at the test points, in some of which a carbonate filler of 6.5 µm or 13 µm was formed. In the following results, the filler contents are normalized to a level of 6%, if not separately otherwise stated. The control test points were:
Capim SBF, Imerys (and 10 kg/t of starch, added to the 3.8% pulp), hereinafter Capim
Intramax, Imerys (and 10 kg/t of starch, added to the 3.8% pulp), hereinafter Intramax
Control 1, i.e. sheets made from chemical pulp fibre without starch
Control 2, i.e. 5 kg/t of starch, added to the 3.8% pulp
Control 3, i.e. 10 kg/t of starch, added to the 3.8% pulp

From the pulps of consistencies of 0.2% thus manufactured, sheets of 80 g/m² were produced in a sheet mould without circulated water, according to the standards SCAN-C 26:76 (SCAN-M 5:76) (10 sheets from each test point). After this, the sheets were dried in a drum drier at 105 °C for two hours, before they were taken to be aerated at 23 °C and a relative humidity of 50% for 48 hours. After this, their basis weights were verified and the following properties were determined:
- Filler content (525 °C and 2 hours)
- ISO brightness (L&W Elrepho Spectrophotometer SE070), ISO 2470
- Opacity (L&W Elrepho Spectrophotometer SE070), ISO 2471
- Scott bond (Internal bond tester Huygen), TAPPI-UM403
- TEA (L&W Tensile Tester with Fracture Toughness), SCAN-P 38:80

Between the particle size of the carbonate filler manufactured at the underpressure and the portion of pulp starch, a factorial test according to a test plan was conducted, the variables being the following:
- Portion of pulp starch 0, 5, and 10 kg/t
- Average particle size (APS) of the carbonate filler 0, 6.5, and 13 µm.

For the midpoint of the test, i.e. 5 kg/t of starch and the particle size (APS) of the 6.5 micrometer carbonate filler, two repetitions were conducted to clarify statistical reliability. The underpressure conditions used for the particle size were selected according to the previous Example 2. In practice, the delay time of the underpressure is used to influence the particle size (APS) of the carbonate filler. In the test, 0 micrometers means that no carbonate filler is manufactured in the pulp. The carbonate filler sizes of 6.5 and 13 micrometers correspond to the delays of 40 seconds (100 g CaO/30 I), 6.5 µm and 600 seconds (200 g CaO/30 I), 13 µm at an underpressure of 0.92 bar and a temperature of 45°, respectively.

To produce the underpressure, a 50-litre steel container was used, in which the underpressure was formed by means of a pump. The 3.8% pulp, to which the desired portion of starch was added, was diluted to a consistency of 0.2% with the bicarbonate ion solution, according to Example 1, before the underpressure treatment.

The cationic pulp starch used in the tests was from Chemigate Oy (Raisamyl, the DS of which was 0.035). Every time when used, the pulp starch was added to the 3.8% pulp at a mixing time of 1 minute before diluting it to a consistency of 0.2%. Kaolins (Capim and Intramax) were added to the 0.2% pulp. The bicarbonate ion solutions manufactured according to Example 1 were used for the dilution of the pulp from 3.8% to 0.2%. The carbonate fillers were manufactured from this by underpressurisation. As a retention agent, 200 g/t of PAM (Fennopol 3400, Kemira) were added to the sheet mould during the mixing.

The test points of the test plan are presented in Table 4.

**Table 4. Conditions of the test plan. Starch was added to the 3.8% pulp before diluting it to 0.2%.**

| TEST | Starch, kg/t | The particle size of carbonate, µm | gCaO/30I | Underpressure, bar | Temperature, °C |
|---|---|---|---|---|---|
| 1 | 0 | 0 | 0 | not used | not used |
| 2 | 10 | 13 | 200 | 0.92 | 45 |
| 3 | 5 | 6.5 | 100 | 0.92 | 45 |
| 4 | 0 | 13 | 200 | 0.92 | 45 |
| 5 | 5 | 6.5 | 100 | 0.92 | 45 |
| 6 | 10 | 0 | 0 | not used | not used |
| 7 | 5 | 6.5 | 100 | 0.92 | 45 |

As a whole, the test plan is extremely successful. The index of determination for the final model is over 95%. The strength was measured both as Scott Bond and TEA values. The optical values measured included opacity and brightness (ISO). Naturally, the strength (Scott & TEA) is influenced by the portion of pulp starch - 10 kg/t yields the best strength levels. The particle size (APS) of the carbonate filler as such, but especially together with the starch portion, has an obvious mutual effect on the strength. This means that the carbonate filler can be used to positively influence the reduction of the starch portion and the maintenance of strength, even though the amount of filler in the network is increased.

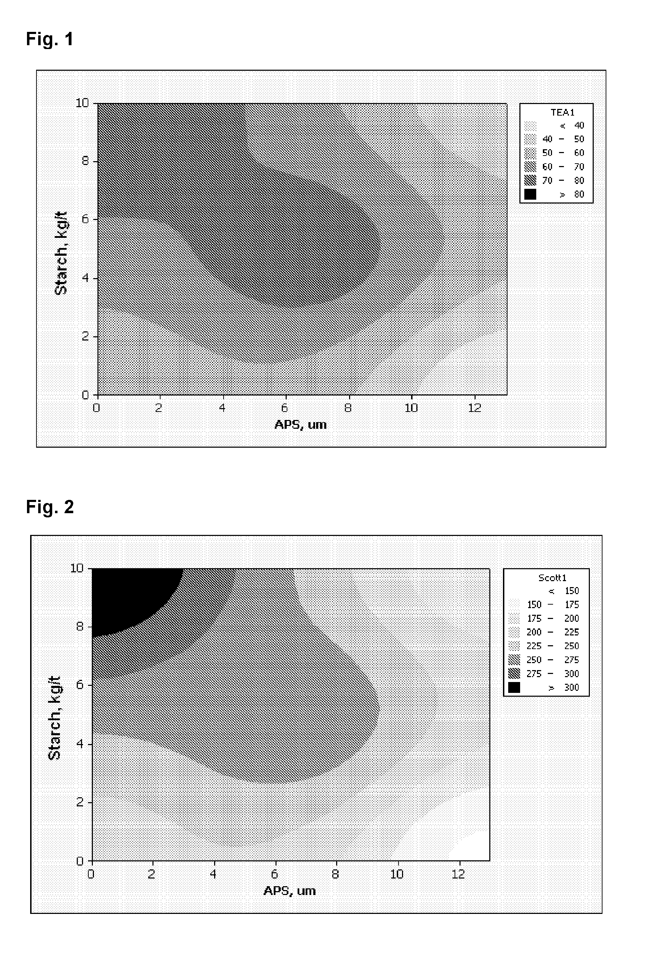

Fig. 1 shows that the best TEA strength is achieved, when the particle size of the carbonate filler is about 6.5 micrometers and the amount of pulp starch is 5 kg/t. The corresponding TEA strengths, J/m², achieved at the control points were:
Control 1 54
Control 2 70
Control 3 90.

Fig. 2 shows that the starch portion of 10 kg/t and no carbonate filler yields the best Scott Bond strength. The corresponding Scott Bond strengths, J/m², achieved at the control points were:
Control 1 214
Control 2 302
Control 3 324.

The strengths achieved with Capim SBF, Intramax, and the carbonate filler according to the invention, with a basis weight of 80 g/m² and a filler content of 10% are shown in Table 5.

Table 5. The kaolins and carbonate filler used yielded these TEA and Scott Bond values. With the kaolins, 10 kg/t, and the carbonate filler (APS 6.5 µm), 5 kg/t of pulp starch.

| Filler | TEA, J/m2 | Scott Bond, J/m2 |
|---|---|---|
| Intramax | 44 | 211 |
| Capim | 46 | 208 |
| Carbonate filler | 77 | 273 |

As stated above, the above values are achieved using 10 kg/t of pulp starch. When using the carbonate filler of 6.5 µm and 5 kg/t of pulp starch, a Scott Bond strength of 273 J/m² and a TEA strength of 77 J/m² are achieved. Both values are clearly higher than with the corresponding amounts of kaolin filler (Table 5). 5 kg/t of pulp starch from the pulp without the filler yielded a Scott Bond strength of 302 J/m², so the decrease in the maximum strength caused by the carbonate filler with this amount of starch is minor.

Between the starch portion and the particle size of the carbonate filler, there is a strong mutual impact on the strengths. The P value of the test plan for the mutual effect was 0.01. A P value lower than 0.05 means that the starch portion and the particle size of the carbonate filler have a strong mutual effect on the strengths. In terms of statistics alone, the starch portion and the particle size of the carbonate filler have a significant effect on the strengths.

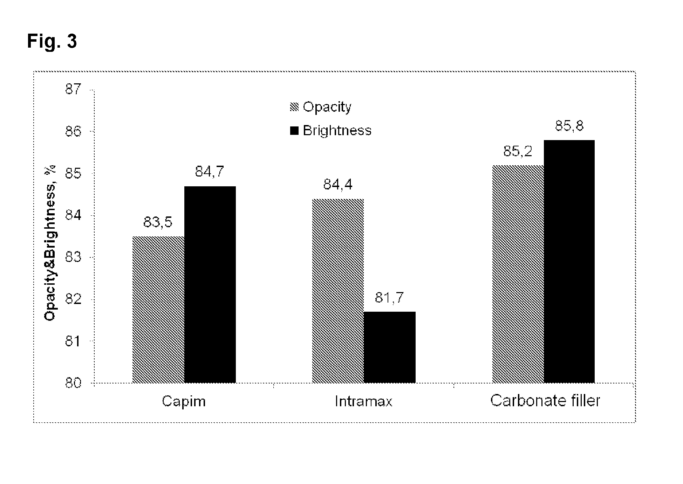

Using the carbonate filler, an improved combination of opacity and brightness can be achieved, in comparison with either one of the kaolins, as indicated in Figure 3. When the results of Table 5 for kaolin and the improved strength properties with a 50% smaller amount of pulp starch obtained from the test plan are added to this, it is obvious that the carbonate filler alone, and especially with the starch, offers the paper or board manufacturer an opportunity to achieve, with the fillers, excellent optical properties, while maintaining the improved strength properties.

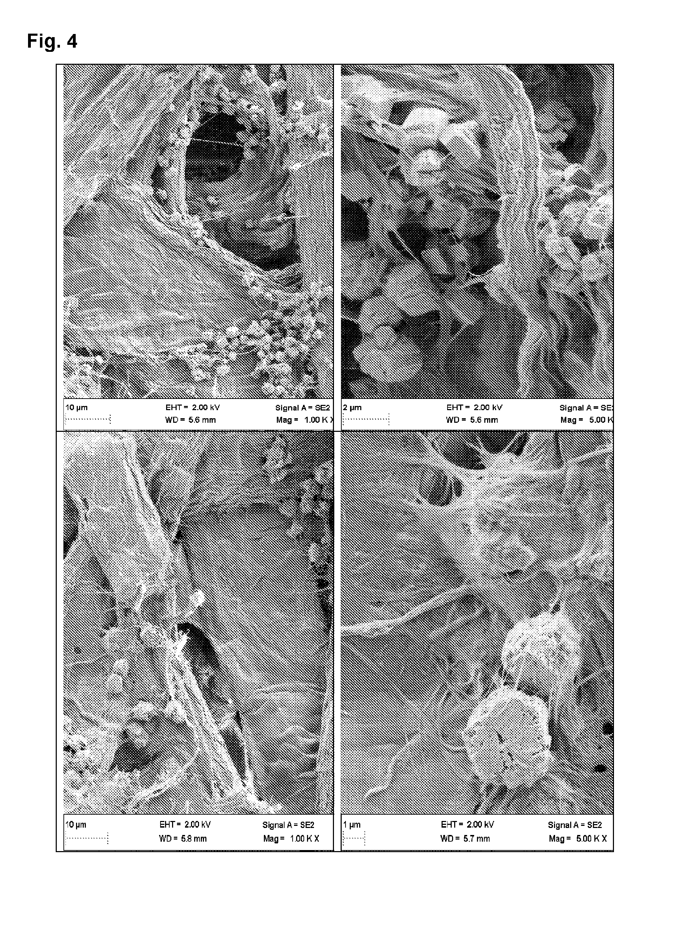

Fig. 4 shows the carbonate particles of each size category, both 6.5 and 13 µm, on the surface of the manufactured chemical pulp sheets of 80 g/m². In the figures, one can observe the angular shape of the carbonate fillers. In the carbonate fillers of 6.5 µm in the lower row, one can also observe porosity in the structure of the carbonate filler. Fig. 4 also shows how the carbonate fillers are clearly bonded to the fibrous substance (starch and/or fibrils of the fibre).

### Example 4 (Precipitation of bicarbonate with another mineral filler)

In this test series, 0, 10% and 20% of ground calcium carbonate GCC, calculated from dry fibre, was added to the 3.8% pulp of the preceding example as a control sample (Hydrocarb 60 Filler LV, Omya). As a control sample, precipitated calcium carbonate PCC (FS-240, Shaefer Finland Oy) was also used. The optical (brightness and opacity) properties and strength (Scott Bond) obtained from the control samples were compared to the results manufactured according to the preceding example and obtained using underpressure. In this example, the underpressurisations were carried out as follows: First, 5 kg/t of starch (Raisamyl DS 0.035; Chemigate Oy) was added to the 3.8% pulp. After this, the 3.8% pulp was diluted to a consistency of 0.2% with the bicarbonate ion solution and, subsequently, 10% or 20% of either GCC or PCC was added to this diluted pulp, while evenly agitating, before the underpressurisation. These test points are called GCC and PCC underpressurisations in Table 5, where the results normalized to a filler content of 5% are shown. The bicarbonate ion solution was manufactured according to Example 1 by adding 100 g of calcium oxide to 30 litres of the manufactured solution. The 0.2% fibre pulp and either 10% or 20% of GCC or PCC, diluted with the bicarbonate ion solution used, were conducted to the underpressurisation. Thereafter, this mixture was kept at an underpressure of 0.92 bar for 40 seconds. At the control points (GCC and PCC), 5 kg/t of starch was also added to the 3.8% pulp. After this, the pulp was diluted to a consistency of 0.2% with tap water. 10% or 20% of GCC or PCC was added to this diluted pulp before making the sheets. As a retention agent, 200 g/t of PAM (Fennopol 3400, Kemira) was added to the sheet mould during the mixing.

From the pulps of consistencies of about 0.2% thus manufactured, sheets of 80 g/m² were produced in a sheet mould without circulated water, according to the standards SCAN-C 26:76 (SCAN-M 5:76) (10 sheets from each test point). Subsequently, the sheets were dried in a drum drier at 105 °C for two hours, before they were taken to aerate at 23 °C and a relative humidity of 50% for 48 hours. After this, their basis weights were verified and the following properties were determined:
- Filler content (525 °C and 2 hours)
- ISO brightness (L&W Elrepho Spectrophotometer SE070), ISO 2470
- Opacity (L&W Elrepho Spectrophotometer SE070), ISO 2471
- Scott bond (Internal bond tester Huygen), Tappi-UM403
- Thickness (L&W Thickness tester SE51), ISO 534

The basis weights of the sheets were at the target basis weight of 80 g/m², with an accuracy of ±0.6 g/m².

The assessment of the printing properties of the sheets in this test was made by measuring the density. The sheets were printed by the Universial Testprinter (Testprint B.V.) by using a Cold set black (Sun Chemical, viscosity 7.3 Pas) with 10 milligrams of ink on the upper surface of the sheet. The densities were measured by a densitometer (Macbeth) from the aerated and dried samples after 24 hours from the printing. The Universial testprinter employed a pressure of 630 N and a velocity of 1 m/s.

According to the filler content determined from the sheets (525°C and 2 hours), the results are normalized to the same filler content of 5%. In Table 6, the results are shown, normalized to a filler content of 5%. 95% means a confidence interval of 95%.

**Table 6. The test results which are normalized to a filler content of 5% in a basis weight of 80 g/m².**

| Test point | Opacity, % | Brightness, % | Scott Bond, J/m2 | Thickness, µm | Optical density, 10g |
|---|---|---|---|---|---|
| GCC | 83.2 | 84.7 | 185 | 163 | 1.43 |
| PCC | 84.6 | 85.5 | 182 | 186 | 1.46 |
| GCC underpressurisation | 86.4 | 88.1 | 255 | 229 | 1.72 |
| PCC underpressurisation | 86.2 | 88.3 | 246 | 226 | 1.69 |
| 95 % | ±0.5 | ±0.3 | ±9 | ±8 | ±0.06 |

The results of Table 6 indicate that both the strength (Scott Bond), optical values (brightness and opacity), thickness, and optical density are on an improved level at both the GCC and PCC underpressurisation points and at the control points GCC and PCC.

## Claims

1. A process for manufacturing a filler containing calcium, sodium or magnesium carbonate, **characterized by**
- forming an acidic bicarbonate ion solution from a corresponding hydroxide solution by adding carbon dioxide to the solution, and
- forming a carbonate portion of the filler by increasing the pH of the obtained acidic bicarbonate ion solution to a neutral or alkaline range by means of underpressure or centrifugal force or a combination thereof.

2. The process according to claim 1, wherein calcium hydroxide or magnesium hydroxide or a mixture thereof is used as the hydroxide.

3. The process according to claim 1 or 2, wherein the hydroxide is manufactured by elutriating burnt lime, burnt dolomite, MgO, or another such source of calcium, sodium or magnesium in water, which when elutriated in water gives an alkaline solution, or by elutriating a mixture of two or more of the above.

4. The process according to any preceding claim, wherein the hydroxide and the carbon dioxide are added essentially at the same time.

5. The process according to any of claims 1 - 3, wherein carbon dioxide is added to the finished hydroxide solution at a separate stage.

6. The process according to any preceding claim, wherein an additional mineral-rich filler, such as ground calcium carbonate (GCC), precipitated calcium carbonate (PCC), wollastonite, kaolin, talc, chalk, satin white, or a mixture thereof, is added to the acidic bicarbonate ion solution before the carbonate portion of the filler is formed from the solution.

7. The process according to any preceding claim, wherein the dry matter of the obtained carbonate filler is increased by infiltrating, depositing, pressing, evaporating, drying, or by means of centrifugal force.

8. The process according to any preceding claim, wherein the hydroxide solution is selected from such aqueous solutions or aqueous pulps, which belong to the aggregates or process waters of the manufacturing process of a fibre product containing chemical pulp fibre, wood fibre, or synthetic fibre or a mixture thereof.

9. A process for manufacturing a fibre product containing chemical pulp fibre, wood fibre or synthetic fibre, or a mixture thereof, wherein a fibre pulp is manufactured, wherein a carbonate-containing filler is used, whereafter the fibre product is compressed from the pulp and optionally coated, **characterised in that** at least the carbonate portion of the used filler is formed in an aqueous solution used for the manufacture of the pulp, before the pulp is compressed into the fibre product, or it is formed in a coating mix before the optional coating of the fibre product, by using the process according to any of claims 1 - 8.

10. The process according to claim 9, wherein GCC or PCC or a mixture thereof is used as the carbonate portion of the filler or a part thereof, and wherein the filler can also contain wollastonite.

11. The process according to claim 9 or 10, wherein at least the carbonate portion of the filler is formed into the aqueous solution before the head box of the machine used in the manufacture of the fibre product.

12. The process according to any of claims 9 - 11, wherein a paper or board product is manufactured.

## Patentansprüche

1. Verfahren zur Herstellung eines Füllstoffes, der Kalzium-, Natrium- oder Magnesiumcarbonat enthält, **gekennzeichnet durch**:
- die Bildung einer sauren Bikarbonat-Ionlösung aus einer entsprechenden Hydroxidlösung **durch** Zugabe von Kohlendioxid zu der Lösung;
- die Bildung eines Karbonatanteils des Füllstoffes **durch** Erhöhung des pH-Werts der erzielten sauren Bikarbonat-Ionlösung auf einen neutralen oder alkalinen Bereich mittels Unterdruck oder Fliehkraft oder eine Kombination aus beiden.

2. Verfahren gemäß Anspruch 1, worin Kalziumhydroxid oder Magnesiumhydroxid oder ein Gemisch daraus als Hydroxid verwendet werden.

3. Verfahren gemäß Anspruch 1 oder 2, worin das Hydroxid hergestellt wird, indem Branntkalk, gebrannter Dolomit, MgO oder eine andere ähnliche Kalziumquelle, Natrium oder Magnesium in Wasser geschlämmt werden, was, wenn in Wasser geschlämmt, eine alkaline Lösung ergibt, oder indem ein Gemischs aus zwei oder mehr der oben erwähnten [Bestandteile] geschlämmt werden.

4. Verfahren gemäß einem der vorstehenden Ansprüche, worin das Hydroxid und das Kohlenstoffdioxid hauptsächlich zur gleichen Zeit zugegeben werden.

5. Verfahren gemäß einem der vorstehenden Ansprüche 1-3, worin das Kohlenstoffdioxid der fertigen Hydroxidlösung in einem separaten Schritt zugegeben wird.

6. Verfahren gemäß einem der vorstehenden Ansprüche, worin ein zusätzlicher, mineralstoffreicher Füllstoff, wie beispielsweise gemahlenes Kalziumkarbonat (GCC), gefälltes Kalziumkarbonat (PCC), Wollastonit, Kaolin, Talkum, Kreide, Satinweiß oder ein Gemisch daraus, der sauren Bikarbonat-Ionlösung zugegeben wird, bevor der Karbonatanteil des Füllstoffes aus der Lösung gebildet wird.

7. Verfahren gemäß einem der vorstehenden Ansprüche, worin die Trockensubstanz des erzielten Karbonatfüllers durch Infiltration, Ablagerung, Komprimieren, Verdampfen, Trocknen oder mittels Fliehkraft erhöht wird.

8. Verfahren gemäß einem der vorstehenden Ansprüche, worin die Hydroxidlösung aus solchen wässrigen Lösungen oder wässrigen Pulpen gewählt wird, die zu den Zuschlagstoffen oder Prozesswassern der Produktionsverfahren von einem Faserprodukt gehören, welches chemische Zellstofffasern, Holzfasern oder Kunststofffasern oder einem Gemisch daraus enthält.

9. Verfahren zur Herstellung eines Faserprodukts, welches chemische Zellstofffasern, Holzfasern oder Kunststofffasern oder einem Gemisch daraus enthält, worin eine Faserpulpe hergestellt wird, worin ein karbonathaltiger Füllstoff verwendet wird, wonach das Faserprodukt aus der Pulpe gepresst und optional beschichtet wird, **dadurch gekennzeichnet, dass** zumindest der Karbonatanteil des verwendeten Füllstoffs in einer wässrigen Lösung gebildet wird, die zur Herstellung der Pulpe verwendet wird, bevor die Pulpe in das Faserprodukt gepresst wird, oder als ein Beschichtungsgemisch vor der optionalen Beschichtung des Faserprodukts gebildet wird, indem das Verfahren gemäß einem der Ansprüche 1 - 8 angewendet wird.

10. Verfahren gemäß Anspruch 9, worin GCC oder PCC oder ein Gemisch daraus als Karbonatanteil des Füllstoffes oder eines Teils davon verwendet wird und worin der Füllstoff ebenfalls Wollastonit enthält.

11. Verfahren gemäß Anspruch 9 oder 10, worin zumindest der Karbonatanteil des Füllstoffes in der wässrigen Lösung vor dem Stoffauflauf der zur Herstellung des Faserprodukts verwendeten Maschine gebildet wird.

12. Verfahren gemäß einem der Ansprüche 9 - 11, worin ein Papier- oder Kartonprodukt hergestellt wird.

## Revendications

1. Processus pour fabriquer un agent de remplissage contenant du calcium, du sodium ou du carbonate de magnésium, **caractérisé par**
- la formation d'une solution acide d'ion de bicarbonate à partir d'une solution d'hydroxyde correspondante en ajoutant du dioxyde de carbone à la solution, et
- la formation d'une partie carbonate de l'agent de remplissage en augmentant le pH de la solution acide d'ion de bicarbonate obtenue jusqu'à une plage neutre ou alcaline au moyen d'une sous-pression ou d'une force centrifuge ou d'une combinaison des deux.

2. Processus selon la revendication 1, dans lequel de l'hydroxyde de calcium ou de l'hydroxyde de magnésium ou un mélange des deux est utilisé en tant qu'hydroxyde.

3. Processus selon la revendication 1 ou 2, dans lequel l'hydroxyde est fabriqué par élutriation de chaux vive, de dolomite calcinée, de MgO, ou d'une autre telle source de calcium, de sodium ou de magnésium dans de l'eau, qui en subissant une élutriation dans l'eau donne une solution alcaline, ou par élutriation d'un mélange de deux ou plusieurs de ce qui précède.

4. Processus selon l'une quelconque des revendications précédentes, dans lequel l'hydroxyde et le dioxyde de carbone sont ajoutés sensiblement en même temps.

5. Processus selon l'une quelconque des revendications 1 à 3, dans lequel le dioxyde de carbone est ajouté à la solution d'hydroxyde finie à une étape distincte.

6. Processus selon l'une quelconque des revendications précédentes, dans lequel un agent de remplissage supplémentaire riche en minéral, comme du carbonate de calcium moulu (GCC), du carbonate de calcium précipité (PCC), de la wollastonite, du kaolin, du talc, de la craie, du blanc satin, ou un mélange de ceux-ci, est ajouté à la solution acide d'ion de bicarbonate avant que la partie carbonate de l'agent de remplissage ne soit formée à partir de la solution.

7. Processus selon l'une quelconque des revendications précédentes, dans lequel la matière sèche de l'agent de remplissage de carbonate obtenu est augmentée par infiltration, dépôt, pressage, évaporation, séchage, ou au moyen d'une force centrifuge.

8. Processus selon l'une quelconque des revendications précédentes, dans lequel la solution d'hydroxyde est sélectionnée à partir de telles solutions aqueuses ou pâtes aqueuses, qui appartiennent aux agrégats ou eaux de traitement du processus de fabrication d'un produit fibreux contenant de la fibre de pâte chimique, de la fibre ligneuse, ou de la fibre synthétique ou un mélange de celles-ci.

9. Processus pour fabriquer un produit fibreux contenant de la fibre de pâte chimique, de la fibre ligneuse ou de la fibre synthétique, ou un mélange de celles-ci, dans lequel une pâte fibreuse est fabriquée, dans laquelle un agent de remplissage contenant du carbonate est utilisé, après quoi le produit fibreux est comprimé à partir de la pâte et est revêtu de manière facultative, **caractérisé en ce qu'**au moins la partie carbonate de l'agent de remplissage utilisé est formée dans une solution aqueuse utilisée pour la fabrication de la pâte, avant que la pâte ne soit comprimée en produit fibreux, ou elle est formée dans un mélange de revêtement avant le revêtement facultatif du produit fibreux, en utilisant le processus selon l'une quelconque des revendications 1 à 8.

10. Processus selon la revendication 9, dans lequel on utilise du GCC ou PCC ou un mélange des deux en tant que partie carbonate de l'agent de remplissage ou une partie de celui-ci, et dans lequel l'agent de remplissage peut également contenir de la wollastonite.

11. Processus selon la revendication 9 ou 10, dans lequel au moins la partie carbonate de l'agent de remplissage est formée en solution aqueuse avant la caisse de tête de la machine utilisée dans la fabrication du produit fibreux.

12. Processus selon l'une quelconque des revendications 9 à 11, dans lequel un produit papier ou un produit carton est fabriqué.
